# EUROPÄISCHE PATENTSCHRIFT

(11) **EP 1 687 347 B1**
(45) Veröffentlichungstag und Bekanntmachung des Hinweises auf die Patenterteilung: **12.01.2011**
(21) Anmeldenummer: 04797919.0
(22) Anmeldetag: 16.11.2004
(51) Int. Cl.: C08F 220/00, C11D 3/00

(54) **WASSERLÖSLICHE COPOLYMERE VON MONOETHYLENISCH UNGESÄTTI GTEN POLYALKYLENOXIDMONOMEREN UND MINDESTENS EIN STICKSTOFFATOM ENTHALTENDEN DIPOLAREN MONOMEREN**
WATER-SOLUBLE COPOLYMERS OF MONOETHYLENICALLY UNSATURATED POLYALKYLENE OXIDE MONOMERS AND DIPOLAR MONOMERS CONTAINING AT LEAST ONE NITROGEN ATOM
COPOLYMERES HYDROSOLUBLES DE MONOMERES D'OXYDE DE POLYALKYLENE INSATURES ET DE MONOMERES DIPOLAIRES CONTENANT AU MOINS UN ATOME D'AZOTE

(30) Priorität: 20.11.2003 US 523305 P
(43) Veröffentlichungstag der Anmeldung: 09.08.2006
(73) Patentinhaber: BASF SE, 67056 Ludwigshafen (DE)
(72) Erfinder: BOECKH, Dieter, 67117 Limburgerhof (DE); PFEIFFER, Thomas, 67459 Böhl-Iggelheim (DE); BECKER, Stefan, 68167 Mannheim (DE); GUZMANN, Marcus, 69242 Mühlhausen (DE); REDDY, Parmod Kakumanu, West Chester, OH 45069 (US); AIKEN III, John Davis, Loveland, OH 45140 (US)
(86) Internationale Anmeldenummer: PCT/EP2004/012967
(87) Internationale Veröffentlichungsnummer: WO 2005/049674

(56) Entgegenhaltungen:
- WO-A-01/92451

## Beschreibung

Die vorliegende Erfindung betrifft neue wasserlösliche Copolymere, die
(a) 60 bis 99 Gew.-% mindestens eines monoethylenisch ungesättigten Polyalkylen-oxidmonomers der allgemeinen Formel I 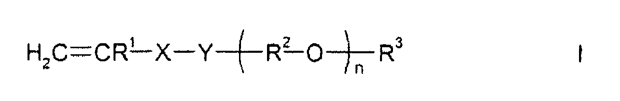 in der die Variablen folgende Bedeutung haben:
   - X: -CH₂- oder -C(O)-, wenn Y für -O- steht; -C(O)-, wenn Y für -NH- steht; -O- oder-O-(CH₂)₄-, wenn Y für eine chemische Bindung steht;
   - Y: -O-, -NH- oder eine chemische Bindung;
   - R¹: Wasserstoff oder Methyl;
   - R²: C₂-C₄-Alkylenreste, die gleich oder verschieden sowie linear oder verzweigt sein können, wobei jedoch mindestens 50% der Reste R² für Ethylen ste- hen;
   - R³: C₁-C₂₂-Alkyl, Phenyl, p-(C₁-C₁₂-alkyl)phenyl oder Wasserstoff;
   - n: eine ganze Zahl von 6 bis 50,
(b) 1 bis 40 Gew.-% mindestens eines nichtquaternisierten, mindestens ein Stickstoffatom enthaltenden, dipolaren Monomers, ausgewählt aus der Gruppe der N-Vinylpyrrolidone, N-Vinylimidazole, N-Vinylcaprolactame, Vinylpyridine, N-Vinylformamide, N-Vinylacetamide, basische Ester der Acrylsäure mit Aminoalkoholen, basische Ester der Methacrylsäure mit Aminoalkoholen, N,N-Di(C₁-C₄-alkyl)amino(C₂-C₆-alkyl)amide der Acrylsäure und N,N-Di(C₁-C₄-alkylamino(C₂-C₆-alkyl)amide der Methacrylsäure,
(c) 0 bis 39 Gew.-% anderer nichtionischer monoethylenisch ungesättigter Monomere und
(d) 0 bis 10 Gew.-% anderer anionischer monoethylenisch ungesättigter Monomere
einpolymerisiert enthalten und ein mittleres Molekulargewicht M_{w} von 2 000 bis 500 000 D aufweisen.

Außerdem betrifft die Erfindung die Verwendung dieser Copolymere als Dispergiermittel und Sequestriermittel für pigmentierte Materialien, als Zusatz zu Waschmitteln, Wäschevorbehandlungsmitteln, Reinigungsmitteln für harte Oberflächen, Zahnreinigungsmitteln und Körperpflegemitteln sowie als Hilfsstoffe für die Textiluerarbeitung. Papierherstellung und -verarbeitung und Deinkingprozesse.

Nicht zuletzt betrifft die Erfindung Waschmittelformulierungen, die diese Copolymere enthalten.

Pigmenthaltige Verschmutzungen, insbesondere solche, die durch die farbgebenden Komponenten von Tee, Kaffee oder auch Gras hervorgerufen werden, sind in der Regel nur schwer von textilen und harten Oberflächen zu entfernen. Auch im Bereich der Zahnpflege tritt dieses Problem auf. Weiterhin ist die Entfernung pigmentierter Materialien von Substraten auch in technischen Prozessen, wie Textilverarbeitung, Papierherstellung und -verarbeitung sowie Deinkingprozessen, von Bedeutung. Die bislang für diese Zwecke eingesetzten Mittel sind in der Regel nicht zufriedenstellend.

In der JP-A-1999/208098 wird die Verwendung von Copolymeren von N-Vinylimidazolen und Methylpolyethylenglykol(meth)acrylaten, die 90 bis 95 mol-% des N-Vinylimidazolmonomers einpolymerisiert enthalten, als Farbstoffrezeptor für die Beschichtung von Ink-Jet-Papieren beschrieben.

Aus der JP-A-1986/26608 sind wäßrige Pigmentdispersionen für Anstrichmittel bekannt, die als Dispergiermittel Copolymere von 48 bzw. 46 Gew.-% Polyethylen- oder -propylenglykolmethacrylat, 50 Gew.-% N-Vinylpyrrolidon oder N-Vinylimidazol und zusätzlich 2 bzw. 4 Gew.-% quaternäre Ammoniumgruppen enthaltender (Meth)Acrylmonomere enthalten.

Auch in der JP-A-2001/31885 werden Dispergiermittel für Pigmente beschrieben, die Copolymere von N,N-Dimethylaminopropylacrylamid oder N-Vinylimidazol, Methylpolyethylenglykolmethacrylat und 65 bzw. 75 Gew.-%, bezogen auf das jeweilige Copolymer, eines Makromonomers auf der Basis von Polymethylmethacrylat oder eines Methylmethacrylat/2-Hydroxyethylmethacrylat-Copolymers mit jeweils einer endständigen Methacryloylgruppe darstellen.

Der vorliegenden Erfindung lag die Aufgabe zugrunde, Polymere bereitzustellen, die sich als Dispergiermittel für pigmenthaltigen Schmutz eignen.

Demgemäß wurden wasserlösliche Copolymere gefunden, die
(a) 60 bis 99 Gew.-% mindestens eines monoethylenisch ungesättigten Polyalkylenoxidmonomers der allgemeinen Formel I 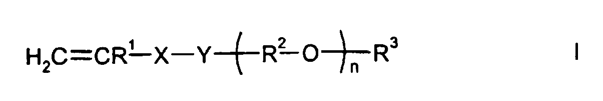 in der die Variablen folgende Bedeutung haben:
   - X: -CH₂- oder -C(O)-, wenn Y für -O- steht; -C(O)-, wenn Y für -NH- steht; -O- oder -O-(CH₂)₄-, wenn Y für eine chemische Bindung steht;
   - Y: -O-, -NH- oder eine chemische Bindung;
   - R¹: Wasserstoff oder Methyl;
   - R²: C₂-C₄-Alkylenreste, die gleich oder verschieden sowie linear oder verzweigt sein können, wobei jedoch mindestens 50% der Reste R² für Ethylen ste- hen;
   - R³: C₁-C₂₂-Alkyl, Phenyl, p-(C₁-C₁₂-alkyl)phenyl oder Wasserstoff;
   - n: eine ganze Zahl von 6 bis 50,
(b) 1 bis 40 Gew.-% mindestens eines nichtquaternisierten stickstoffhaltigen dipolaren Monomers, ausgewählt aus der Gruppe der N-Vinylpyrrolidone, N-Vinylimidazole, N-Vinylcaprolactame, Vinylpyridine, N-Vinylformamide, N-Vinylacetamide, basische Ester der Acrylsäure mit Aminoalkoholen, basische Ester der Methacrylsäure mit Aminoalkoholen, N,N-Di(C₁-C₄-alkyl)amino(C₂-C₆-alkyl)amide der Acrylsäure und N,N-Di(C₁-C₄-alkyl)amino(C₂-C₆-alkyl)amide der Methacrylsäure,
(c) 0 bis 39 Gew.-% anderer nichtionischer monoethylenisch ungesättigter Monomere und
(d) 0 bis 10 Gew.-% anderer anionischer monoethylenisch ungesättigter Monomere
einpolymerisiert enthalten und ein mittleres Molekulargewicht M_{w} von 2000 bis 500 000 D aufweisen.

Bevorzugte erfindungsgemäße Copolymere enthalten als einpolymerisierte Komponente (a) monoethylenisch ungesättigte Polyalkylenoxidmonomere der Formel I, in der die Variablen folgende Bedeutung haben:
- X: -C(O)-;
- Y: -NH- und vor allem -O-;
- R¹: Wasserstoff und vor allem Methyl;
- R²: C₂-C₄-Alkylenreste, die gleich oder verschieden sowie linear oder verzweigt sein können, wobei jedoch mindestens 70%, insbesondere mindestens 85% der Reste R² für Ethylen stehen; besonders bevorzugt bedeutet R² Ethylen;
- R³: C₁-C₄-Alkyl oder Wasserstoff, insbesondere Wasserstoff und vor allem Methyl;
- n: eine ganze Zahl von 8 bis 35. vor allem 10 bis 30 und besonders bevorzugt 15 bis 25.

Bei den Monomeren (a) handelt es sich entsprechend Formel beispielsweise um:
- Umsetzungsprodukte von (Meth)Acrylsäure mit Polyalkylenglykolen, die nicht endgruppenverschlossen, einseitig durch Alkyl-, Phenyl- oder Alkylphenylreste endgruppenverschlossen, einseitig aminiert oder einseitig durch Alkyl-, Phenyl- oder Alkylphenylreste endgruppenverschlossen und einseitig aminiert sind, also (Meth)Acrylsäureester ((Meth)Acrylate) und (Meth)Acrylamide;
- Vinylether von Polyalkylenglykolen, die nicht endgruppenverschlossen oder einseitig durch Alkyl-, Phenyl- oder Alkylphenylreste endgruppenverschlossen sind;
- Allylether von Polyalkylenglykolen, die nicht endgruppenverschlossen oder einseitig durch Alkyl-, Phenyl- oder Alkylphenylreste endgruppenverschlossen sind.

Die (Meth)Acrylamide sind dabei bevorzugte Monomere (a) und die Acrylate und vor allem die Methacrylate besonders bevorzugte Monomere (a).

Als besonders geeignete Beispiele für die Monomere (a) seien genannt:
- Methylpolyethylenglykol(meth)acrylat und -(meth)acrylamid, Methylpoly(propylenoxid-co-ethylenoxid)(meth)acrylat und -(meth)acrylamid, Ethylpolyethylenglykol-(meth)acrylat und -(meth)acrylamid und Ethylpoly(propylenoxid-co-ethylenoxid)-(meth)acrylat und -(meth)acrylamid mit jeweils 6 bis 50, bevorzugt 8 bis 35, besonders bevorzugt 10 bis 30 und ganz besonders bevorzugt 15 bis 25 Alkylenoxideinheiten, wobei Methylpolyethylenglykolacrylat bevorzugt und Methylpolyethylenglykolmethacrylat besonders bevorzugt ist;
- Polyethylenglykolmonovinylether, Methylpolyethylenglykolmonovinylether und Mono(vinyloxybutyl)polyethylenglykol mit jeweils 6 bis 50, bevorzugt 8 bis 35, besonders bevorzugt 10 bis 30 und ganz besonders bevorzugt 15 bis 25 Alkylenoxideinheiten;
- Polyethylenglykolmonoallylether und Methylpolyethylenglykolmonoallylether mit jeweils 6 bis 50, bevorzugt 8 bis 35, besonders bevorzugt 10 bis 30 und ganz besonders bevorzugt 15 bis 25 Alkylenoxideinheiten.

Der Anteil der Monomere (a) an den erfindungsgemäßen Copolymeren beträgt 60 bis 99 Gew.-%, bevorzugt 70 bis 97 Gew.%, besonders bevorzugt 80 bis 96 Gew.-% und ganz besonders bevorzugt 90 bis 95 Gew.-%.

Für die erfindungsgemäßen Copolymere besonders geeignete Monomere (b) sind N-Vinyllactame, N-Vinylimidazole, Vinylpyridine, N-Vinylamide und basische Ester und Amide von ethylenisch ungesättigten Carbonsäuren.

Im einzelnen seien als Beispiele für besonders geeignete Monomere (b) genannt:
- N-Vinyllactame von Lactamen mit 5- bis 7-gliedrigen Ringen, wie N-Vinylpyrrolidon, N-Vinylcaprolactam und N-Vinyloxazolidon;
- N-Vinylimidazole, d.h. N-Vinylimidazol selbst und seine Derivate, insbesondere C₁-C₅-Alkylderivate, wie N-Vinyl-2-methylimidazol, N-Vinyl-4-methylimidazol, N-Vinyl-5-methylimidazol, N-Vinyl-2-ethylimidazol, N-Vinylimidazolin, N-Vinyl-2-methyl-imidazolin und N-Vinyl-2-ethylimidazolin;
- Vinylpyridine, wie 4-Vinylpyridin und 2-Vinylpyridin;
- N-Vinylamide von gesättigten C₁-C₁₈-Carbonsäuren, wie N-Vinylformamid und N-Vinylacetamid;
- basische Ester von ethylenisch ungesättigten Carbonsäuren, insbesondere die Ester von α,β-ungesättigten C₃-C₆-Monocarbonsäuren, vor allem Acrylsäure und Methacrylsäure, mit Aminoalkoholen, vor allem N,N-Di(C₁-C₄-alkyl)amino-C₂-C₆-alkoholen, wie Dimethylaminoethylacrylat, Dimethylaminoethylmethacrylat, Dimethylaminopropylacrylat, Dimethylaminopropylmethacrylat, Diethylaminoethylacrylat, Diethylaminopropylacrylat, Dimethylaminobutylacrylat und Diethylaminobutylacrylat;
- basische Amide von ethylenisch ungesättigten Carbonsäuren, insbesondere die N,N-Di(C₁-C₄-alkyl)amino(C₂-C₆-alkyl)amide von α,β-ungesättigten C₃-C₆-Monocarbonsäuren, vor allem Acrylsäure und Methacrylsäure, wie Dimethylaminoethylacrylamid, Dimethylaminoethylmethacrylamid, Diethylaminoethylacrylamid, Diethylaminoethylmethacrylamid, Dimethylaminopropylacrylamid, Dimethylaminopropylmethacrylamid, Diethylaminopropylacrylamid und Diethylaminopropylmethacrylamid.

Bevorzugte Monomere (b) sind N-Vinylpyrrolidon, N-Vinylcaprolactam, N-Vinylimidazol, 4-Vinylpyridin, N-Vinylformamid und basische (Meth)Acrylsäureester und -amide, insbesondere N,N-Di(C₁-C₄-alkyl)aminoethyl(meth)acrylate, N,N-Di(C₁-C₄-alkyl)aminoethyl(meth)acrylamide, N,N-Di(C₁-C₄-alkyl)aminopropyl(meth)acrylate und N,N-Di(C₁-C₄-alkyl)aminopropyl(meth)acrylamide, unter denen N,N-Dimethylaminoethyl(meth)acrylat und N,N-Dimethylaminopropyl(meth)acrylamid besonders hervorzuheben sind.

Besonders bevorzugte Monomere (b) sind N-Vinylpyrrolidon, N-Vinylimidazol und Kombinationen von N-Vinylpyrrolidon und N-Vinylimidazol.

Der Anteil der Monomere (b) an den erfindungsgemäßen Copolymeren beträgt 1 bis 40 Gew.%, bevorzugt 2 bis 30 Gew.%, besonders bevorzugt 4 bis 20 Gew.-% und ganz besonders bevorzugt 5 bis 15 Gew.-%.

Als optionale Komponente (c) können die erfindungsgemäßen Copolymere nichtionische monoethylenisch ungesättigte Monomere enthalten.

Geeignete Monomere (c) sind beispielsweise:
- Ester von monoethylenisch ungesättigten C₃-C₆-Carbonsäuren, vor allem Acrylsäure und Methacrylsäure, mit einwertigen C₁-C₂₂-Alkoholen, insbesondere C₁-C₁₆-Alkoholen, sowie Hydroxyalkylester von monoethylenisch ungesättigten C₃-C₆-Carbonsäuren, vor allem Acrylsäure und Methacrylsäure, mit zweiwertigen C₂-C₄-Alkoholen, wie Methyl(meth)acrylat, Ethyl(meth)acrylat, n-Butyl(meth)acrylat, sec.-Butyl(meth)acrylat, tert.-Butyl(meth)acrylat, Ethylhexyl(meth)acrylat, Hydroxyethyl-(meth)acrylat und Hydroxypropyl(meth)acrylat;
- Amide von monoethylenisch ungesättigten C₃-C₆-Carbonsäuren, vor allem Acrylsäure und Methacrylsäure, mit primären und sekundären C₁-C₁₂-Aminen, wie (Meth)Acrylamid, N-Methyl(meth)acrylamid, N-Isopropyl(meth)acrylamid und N-Butyl(meth)acrylamid;
- Vinylester von gesättigten C₁-C₁₈-Carbonsäuren, wie Vinylacetat und Vinylpropionat;
- aliphatische und aromatische Olefine, wie Ethylen, Propylen, C₄-C₂₄-α-Olefine, insbesondere C₄-C₁₆-α-Olefine, z.B. Butylen, Isobutylen, Diisobuten, Styrol und α-Methylstyrol, sowie auch Diolefine mit einer aktiven Doppelbindung, z.B. Butadien;
- ungesättigte Nitrile, wie Acrylnitril und Methacrylnitril.

Bevorzugte Monomere (c) sind (C₁-C₁₆-Alkyl)(meth)acrylate, Vinylacetat, Vinylpropionat, C₄-C₁₆-α-Olefine, Styrol und (Meth)Acrylnitril.

Besonders bevorzugte Monomere (c) sind Methyl(meth)acrylat, Ethyl(meth)acrylat, n-Butylacrylat, tert.-Butylacrylat und Vinylacetat.

Ganz besonders bevorzugte Monomere (c) sind Methylacrylat, Ethylacrylat, Methylmethacrylat und Vinylacetat.

Sind die Monomere (c) in den erfindungsgemäßen Copolymeren enthalten, so kann ihr Anteil bis zu 39 Gew.-%, bevorzugt von 2,5 bis 25 Gew.%, besonders bevorzugt von 5 bis 15 Gew.-%, betragen.

Weiterhin können die erfindungsgemäßen Copolymere als optionale Komponente (d) anionische monoethylenisch ungesättigte Monomere enthalten.

Geeignete Monomere (d) sind beispielsweise:
- α,β-ungesättigte Monocarbonsäuren, die vorzugsweise 3 bis 6 Kohlenstoffatome aufweisen, wie Acrylsäure, Methacrylsäure, Ethacrylsäure, Crotonsäure und Vinylessigsäure, und deren Alkalimetall- und Ammoniumsalze;
- ungesättigte Dicarbonsäuren, die vorzugsweise 4 bis 6 Kohlenstoffatome aufweisen, wie Itaconsäure und Maleinsäure, deren Anhydride, wie Maleinsäureanhydrid, und deren Alkalimetall- und Ammoniumsalze;
- Halbester von ungesättigten Dicarbonsäuren mit C₁-C₆-Alkoholen, wie Itacon- und Maleinsäurehalbester;
- ethylenisch ungesättigte Sulfonsäuren, wie Vinylsulfonsäure, Acrylamidopropansulfonsäure, Metallylsulfonsäure und m- und p-Styrolsulfonsäure;
- ethylenisch ungesättigte Phosphonsäuren, wie Vinylphosphonsäure und m- und p-Styrolphosphonsäure.

Bevorzugte Monomere (d) sind Acrylsäure, Methacrylsäure und Maleinsäure.

Besonders bevorzugte Monomere (d) sind Acrylsäure und Methacrylsäure.

Der Anteil der Monomere (d) an den erfindungsgemäßen Polymeren kann bis zu 10 Gew.-%, bevorzugt von 0,1 bis 5 Gew.-%, besonders bevorzugt von 0,5 bis 2,5 Gew.-%, betragen.

Die erfindungsgemäßen Copolymere haben ein mittleres Molekulargewicht M_{w} von 2 000 bis 500 000 D, bevorzugt von 2 000 bis 250 000 D, besonders bevorzugt von 2 500 bis 100 000 D und ganz besonders bevorzugt von 4 000 bis 60 000 D.

Der K-Wert der erfindungsgemäßen Copolymere liegt üblicherweise bei 8 bis 70, insbesondere bei 10 bis 50, vor allem bei 12 bis 40 (gemessen in 1 gew.-%iger wäßriger Lösung bei 25°C, nach H. Fikentscher, Cellulose-Chemie, Band 13, Seite 58-64 und 71-74 (1932)).

Die erfindungsgemäßen Copolymere können durch radikalische Polymerisation der Monomere (a) und (b) sowie gewünschtenfalls (c) und/oder (d) hergestellt werden.

Sollen die erfindungsgemäßen Copolymere auf (Meth)Acrylsäureestem oder -amiden (a) basieren, kann man jedoch z.B. auch so vorgehen, daß man (Meth)Acrylsäure in zu der molaren Menge des Monomers (a) äquivalenter Menge mit dem Monomer (b) sowie gewünschtenfalls (c) und/oder (d) polymerisiert und das gebildete Copolymer anschließend mit Polyalkylenglykolen, die nicht endgruppenverschlossen, einseitig durch Alkyl-, Phenyl- oder Alkylphenylreste endgruppenverschlossen bzw. einseitig aminiert oder einseitig durch Alkyl-, Phenyl- oder Alkylphenylreste endgruppenverschlossen und einseitig aminiert sind, verestert bzw. aminiert.

Die radikalische Polymerisation der Monomere kann nach allen bekannten Methoden vorgenommen werden, wobei die Verfahren der Lösungspolymerisation und der Emulsionspolymerisation bevorzugt sind.

Vorteilhaft wird die Poylmerisation in Wasser durchgeführt. Es können jedoch auch Mischungen von Wasser und organischen Lösungsmitteln oder organische Lösungsmittel allein als Reaktionsmedium verwendet werden.

Beispiele für geeignete organische Lösungsmittel sind aliphatische und cycloaliphatische einwertige Alkohole, wie Methanol, Ethanol, n-Propanol, Isopropanol, n-Butanol, sek.-Butanol, tert.-Butanol, n-Hexanol und Cyclohexanol, mehrwertige Alkohole, z.B. Glykole, wie Ethylenglykol, Propylenglykol und Butylenglykol, und Glycerin, Alkylether mehrwertiger Alkohole, z.B. Methyl- und Ethylether der genannten zweiwertigen Alkohole, sowie Etheralkohole, wie Diethylenglykol und Triethylenglykol, sowie cyclische Ether, wie Dioxan.

Als Polymerisationsinitiatoren eignen sich sowohl thermisch als auch photochemisch (Photoinitiatoren) zerfallende und dabei Radikale bildende Verbindungen.

Unter den thermisch aktivierbaren Polymerisationsinitiatoren sind Initiatoren mit einer Zerfallstemperatur im Bereich von 20 bis 180°C, insbesondere von 50 bis 90°C, bevorzugt. Beispiele für besonders bevorzugte thermische Initiatoren sind anorganische Peroxoverbindungen, wie Peroxodisulfate (Ammonium- und vorzugsweise Natriumperoxodisulfat), Peroxosulfate, Percarbonate und Wasserstoffperoxid; organische Peroxoverbindungen, wie Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azoverbindungen, wie 2,2'-Azobisisobutyronitril, 2,2'-Azobis(2-methylbutyronitril) und Azobis(2-amidinopropan)dihydrochlorid.

Beispiele für geeignete Photoinitiatoren sind Benzophenon, Acetophenon, Benzoinether, Benzyldialkylketone und deren Derivate.

Die Polymerisationsinitiatoren werden je nach den Anforderungen des zu polymerisierenden Materials üblicherweise in Mengen von 0,01 bis 15 Gew.-%, vorzugsweise 0,5 bis 5 Gew.%, jeweils bezogen auf die zu polymerisierenden Monomere, eingesetzt und können einzeln oder, zur Ausnutzung vorteilhafter synergistischer Effekte, in Kombination miteinander angewendet werden.

Zur Begrenzung der Molmassen der erfindungsgemäßen Copolymere können bei der Polymerisation übliche Regler, z.B. Mercaptoverbindungen, wie Mercaptoethanol, Thioglycolsäure und Natriumdisulfit, zugesetzt werden. Geeignete Reglermengen liegen im allgemeinen bei 0,01 bis 5 Gew.-%, bezogen auf die zu polymerisierenden Monomere.

Die Polymerisationstemperatur liegt in der Regel bei 10 bis 200°C, vor allem bei 40 bis 140°C, insbesondere bei 50 bis 120°C.

Die Polymerisation kann unter atmosphärischem Druck durchgeführt werden, vorzugsweise wird sie jedoch in geschlossenem System unter dem sich entwickelnden Eigendruck vorgenommen.

Die erfindungsgemäßen Copolymere eignen sich hervorragend zur Dispergierung und Sequestrierung von partikulären und löslichen pigmentierten Materialien in wäßrigen Medien, insbesondere pigmenthaltigem Schmutz, wie er z.B. durch die färbenden Bestandteile von Tee, Kaffee, Rotwein, Obst und Obstsäften, Gemüse und Gras sowie Kosmetikprodukten hervorgerufen wird.

Zu diesem Zweck können die erfindungsgemäßen Copolymere sowohl in Waschmitteln, Wäschevorbehandlungsmitteln und Reinigungsmitteln als auch in Zahnreinigungsmitteln und Körperpflegemitteln eingesetzt werden. Ebenso eignen sie sich als Hilfsstoffe für technische Prozesse, wie die Textilverarbeitung, Papierherstellung und -verarbeitung und Deinkingprozesse.

Von ganz besonderer Bedeutung ist die Anwendung der erfindungsgemäßen Copolymere in Waschmitteln und Reinigungsmitteln für die Entfernung von pigmentiertem Schmutz von Oberflächen aller Art. Üblicherweise werden die Copolymere diesen Mitteln in Mengen von 0,05 bis 10 Gew.-% zugesetzt.

Bei den zu behandelnden Oberflächen kann es sich um strukturierte oder poröse Oberflächen, aber auch um glatte, gering strukturierte Oberflächen von flexiblen oder harten Materialien handeln.

Strukturierte und poröse Oberflächen können dabei von faserbasierten Materialien (Fasern, Garne, Gewebe, Vliese, u.a.) oder von porösen makroskopischen Materialien gebildet werden.

Beispiele für faserbasierte Materialien sind Textilien und textile Oberflächen, d.h. alle Arten faserbasierter Gewebe, insbesondere Bekleidungs- und Dekorationsstoffe, Bezüge, wie Möbelbezüge, und Beläge, wie Teppichböden, aus Synthesefasern, wie Polyester, Polypropylen und Polyamid, Naturfasern, wie Baumwolle, Wolle und Seide, und/oder modifizierten Naturfasern, wie modifizierter Baumwolle, z.B. Viskose, und aus Mischgeweben der vorgenannten Fasern, wie Baumwollmischgeweben, z.B. Baumwolle/Polyester- und Baumwolle/Polyamid-Mischgeweben.

Beispiele für poröse Materialien sind Leder, vorzugsweise nicht oder nur gering oberflächenvergütete Leder, wie Wildleder, und Ledergegenstände, z.B. Lederbekleidung, Lederschuhe und Ledermöbel.

Weitere Beispiele für poröse Materialien sind Hölzer, vorzugsweise nicht oder nur gering oberflächenvergütete Hölzer, und Holzgegenstände, z.B. unlackierte Möbel, offenporige hölzerne Wand- und Bodenbeläge und Konstruktionsholz im Bau, und poröse Baumaterialien, wie Sichtbeton, Gasbeton, Verputze, unglasierte Keramik, Ziegel und poröse Mineralien, z.B. Sandstein.

Beispiele für glatte, gering strukturierte Oberflächen sind Oberflächen aus:
Kunststoffen und Kunststoff- bzw. Kunstharzbeschichtungen, z.B. Möbel, Fassadenverkleidungen, Fahrzeuge, Geschirr aus Polypropylen, Polyvinylchlorid oder Polymethylmethacrylat und Bodenbeläge aus Polyvinylchlorid, Polypropylen oder Linoleum; Glas, z.B. Scheibenglas, glasierte Keramik, Flaschen und Glasgeschirr;
Stein, z.B. Steinzeugfliesen und steinerne Fassadenverkleidungen;
Metall, z.B. unlackierte Sichtblechverkleidungen, Roheisen- und Aluminiumkonstruktionen und galvanisierte bzw. verchromte Oberflächen;
Porzellan, z.B. Geschirr und Sanitärkeramik;
Zähne;
geschlossenporig behandelte Hölzer und Leder, z.B. oberflächenvergütete Holzmöbel und Parkettböden sowie Möbelbezüge, Schuhe und Bekleidung aus oberflächenvergüteten Ledern;
Anstriche und Lackierungen auf verschiedensten Unterlagen, z.B. lackierte Fahrzeuge, Wandanstriche und lackierte oder gestrichene Möbel.

Die Behandlung der genannten Oberflächen kann durch Wäsche oder Reinigung erfolgen. Häufig kann es dabei zweckmäßig sein, die Oberflächen z.B. durch Einweichen oder Einsprühen zunächst vorzubehandeln. Beispielsweise ist es zur Entfernung hartnäckigen pigmenthaltigen Schmutzes von Textilmaterialien besonders vorteilhaft, die Schmutzflecken zunächst für eine Dauer von 5 min bis zu 24 h mit flüssigem Waschmittel, einem speziellen Wäschevorbehandlungsmittel oder konzentrierten Lösungen eines Waschmittelpulvers, das jeweils die erfindungsgemäßen Copolymere enthält, einzuweichen und die Textilmaterialien anschließend mit demselben oder einem anderen Waschmittel zu waschen.

Erfindungsgemäße flüssige Waschmittelformulierungen enthalten insbesondere folgende Komponenten:
(A) 0,05 bis 10 Gew.-% mindestens eines erfindungsgemäßen Copolymers,
(B) 0,5 bis 40 Gew.-% mindestens eines nichtionischen, anionischen und/oder kationischen Tensids,
(C) 0 bis 20 Gew.-% eines anorganischen Builders,
(D) 0 bis 10 Gew.-% eines organischen Cobuilders,
(E) 0 bis 60 Gew.-% anderer üblicher Inhaltsstoffe, wie Soda, Enzyme, Parfum, Komplexbildner, Korrosionsinhibitoren, Bleichmittel, Bleichaktivatoren, Bleichkatalysatoren, Farbübertragungsinhibitoren, Vergrauungsinhibitoren, Soil-Release-Polyester, Faser- und Farbschutzadditve, Silicone, Farbstoffe, Bakterizide, organische Lösungsmittel, Löslichkeitsvermittler, Hydrotrope, Verdicker und/oder Alkanolamine und
(F) 0 bis 99,45 Gew.-% Wasser.

Erfindungsgemäße feste Waschmittelformulierungen haben vorzugsweise folgende Zusammensetzung:
(A) 0,05 bis 10 Gew.-% mindestens eines erfindungsgemäßen Copolymers,
(B) 0,5 bis 40 Gew.-% mindestens eines nichtionischen, anionischen und/oder kationischen Tensids,
(C) 0,5 bis 50 Gew.-% eines anorganischen Builders,
(D) 0 bis 10 Gew.% eines organischen Cobuilders und
(E) 0 bis 60 Gew.-% anderer üblicher Inhaltsstoffe, wie Stellmittel, Enzyme, Parfum, Komplexbildner, Korrosionsinhibitoren, Bleichmittel, Bleichaktivatoren, Bleichkatalysatoren, Farbübertragungsinhibitoren, Vergrauungsinhibitoren, Soil-Release-Polyester, Faser- und Farbschutzadditve, Silicone, Farbstoffe, Bakterizide, Auflösungsverbesserer und/oder Sprengmittel,
wobei die Summe der Komponenten (A) bis (E) 100 Gew.-% ergibt.

Die erfindungsgemäßen festen Waschmittelformulierungen können in Pulver-, Granulat-, Extrudat- oder Tablettenform vorliegen.

Als nichtionische Tenside (b) eignen sich dabei vor allem:
- Alkoxylierte C₈-C₂₂-Alkohole, wie Fettalkoholalkoxylate, Oxoalkoholalkoxylate und Guerbet-alkoholethoxylate: Die Alkoxylierung kann mit Ethylenoxid, Propylenoxid und/oder Butylenoxid erfolgen. Es können Blockcopolymerisate oder statistische Copolymere vorliegen. Pro mol Alkohol enthalten sie üblicherweise 2 bis 50 mol, vorzugsweise 3 bis 20 mol, mindestens eines Alkylenoxids. Bevorzugtes Alkylenoxid ist Ethylenoxid. Die Alkohole haben vorzugsweise 10 bis 18 Kohlenstoffatome.
- Alkylphenolalkoxylate, insbesondere Alkylphenolethoxylate, die C₆-C₁₄-Alkylketten und 5 bis 30 mol Alkylenoxid/mol enthalten.
- Alkylpolyglucoside, die C₈-C₂₂-, vorzugsweise C₁₀-C₁₈-Alkylketten und in der Regel 1 bis 20, vorzugsweise 1,1 bis 5, Glucosideinheiten enthalten.
- N-Alkylglucamide, Fettsäureamidalkoxylate, Fettsäurealkanolamidalkoxylate sowie Blockcopolymere aus Ethylenoxid, Propylenoxid und/oder Butylenoxid.

Geeignete anionische Tenside sind beispielsweise:
- Sulfate von (Fett)alkoholen mit 8 bis 22, vorzugsweise 10 bis 18, Kohlenstoffatomen, insbesondere C₉C₁₁-Alkoholsulfate, C₁₂C₁₄-Alkoholsulfate, C₁₂-C₁₈-Alkohol-sulfate, Laurylsulfat, Cetylsulfat, Myristylsulfat, Palmitylsulfat, Stearylsulfat und Talgfettalkoholsulfat.
- Sulfatierte alkoxylierte C₈-C₂₂-Alkohole (Alkylethersulfate): Verbindungen dieser Art werden beispielsweise dadurch hergestellt, daß man zunächst einen C₈-C₂₂-, vorzugsweise einen C₁₀-C₁₈-Alkohol, z.B. einen Fettalkohol, alkoxyliert und das Alkoxylierungsprodukt anschließend sulfatiert. Für die Alkoxylierung verwendet man vorzugsweise Ethylenoxid.
- Lineare C₈-C₂₀-Alkylbenzolsulfonate (LAS), vorzugsweise lineare C₉-C₁₃-Alkylbenzolsulfonate und -Alkyltoluolsulfonate.
- Alkansulfonate, insbesondere C₈-C₂₄-, vorzugsweise C₁₀-C₁₈-Alkansulfonate.
- Seifen, wie die Na- und K-Salze von C₈-C₂₄-Carbonsäuren.

Die anionischen Tenside werden dem Waschmittel vorzugsweise in Form von Salzen zugegeben. Geeignete Salze sind dabei z.B. Alkalimetallsalze, wie Natrium-, Kalium- und Lithiumsalze, und Ammoniumsalze, wie Hydroxyethylammonium-, Di(hydroxyethyl)ammonium- und Tri(hydroxyethyl)ammoniumsalze.

Als besonders geeignete kationische Tenside seien genannt:
- C₇-C₂₅-Alkylamine;
- N,N-Dimethyl-N-(hydroxy-C₇-C₂₅-alkyl)ammoniumsalze;
- mit Alkylierungsmitteln quaternisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln II oder III III 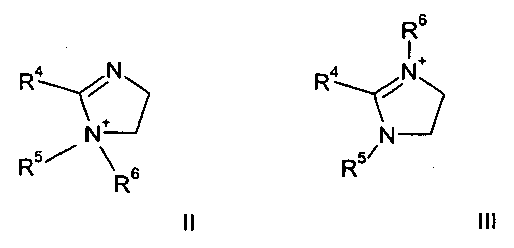 in denen die Variablen folgende Bedeutung haben:
   - R⁴: C₁-C₂₅-Alkyl oder C₂-C₂₅-Alkenyl;
   - R⁵: C₁-C₄-Alkyl oder Hydroxy-C₁-C₄-alkyl;
   - R⁶: C₁-C₄-Alkyl, Hydroxy-C₁-C₄-alkyl oder ein Rest R⁴-(CO)-X-(CH₂)ₚ- (X:-O- oder -NH-; p: 2 oder 3),
   wobei mindestens ein Rest R⁴ C₇-C₂₂-Alkyl ist.

Als anorganische Builder eignen sich insbesondere:
- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in , denen Na teilweise gegen andere Kationen wie Li, K, Ca, Mg oder Ammonium ausgetauscht ist.
- Kristalline Silikate, wie insbesondere Disilikate und Schichtsilikate, z.B. δ- und β-Na₂Si₂O₅. Die Silikate können in Form ihrer Alkalimetall-, Erdalkalimetall- oder Ammoniumsalze eingesetzt werden, bevorzugt sind die Na-, Li- und Mg-Silikate.
- Amorphe Silikate, wie Natriummetasilikat und amorphes Disilikat.
- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat.
- Polyphosphate, wie Pentanatriumtriphosphat.

Als organische Cobuilder eignen sich vor allem:
- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, β-Alanindiessigsäure, Ethylendiamintetraessigsäure, Serindiessigsäure, Isoserindiessigsäure, N-(2-Hydroxyethyl)iminodiessigsäure, Ethylendiamindibernsteinsäure und Methyl- und Ethylglycindiessigsäure.
- Oligomere und polymere Carbonsäuren, wie Homopolymere von Acrylsäure und Asparaginsäure, Oligomaleinsäuren, Copolymere der Maleinsäure mit Acrylsäure, Methacrylsäure oder C₂-C₂₂-Olefinen, z.B. Isobuten oder langkettigen α-Olefinen, Vinyl-C₁-C₈-alkylether, Vinylacetat, Vinylpropionat, (Meth)Acrylsäureester von C₁-C₈-Alkoholen und Styrol. Bevorzugt sind die Homopolymere der Acrylsäure und Copolymere von Acrylsäure mit Maleinsäure. Die oligomeren und polymeren Carbonsäuren werden in Säureform oder als Natriumsalz eingesetzt.

Geeignete Bleichmittel sind beispielsweise Addukte von Wasserstoffperoxid an anorganische Salze, wie Natriumperborat-Monohydrat, Natriumperborat-Tetrahydrat und Natriumcarbonat-Perhydrat, und Percarbonsäuren, wie Phthalimidopercapronsäure.

Als Bleichaktivatoren eignen sich z.B. N,N,N',N'-Tetraacetylethylendiamin (TAED), Natrium-p-nonanoyloxybenzolsulfonat und N-Methylmorpholiniumacetonitrilmethylsulfat.

Vorzugsweise in Waschmitteln eingesetzte Enzyme sind Proteasen, Lipasen, Amylasen, Cellulasen, Oxidasen und Peroxidasen.

Geeignete Farbübertragungsinhibitoren sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Waschmittelinhaltsstoffe sind im übrigen allgemein bekannt. Detaillierte Beschreibungen sind z. B. in den WO-A-99/06524 und 99/04313; in Liquid Detergents, Editor: Kuo-Yann Lai, Surfactant Sci. Ser., Vol. 67, Marcel Decker, New York, 1997, p. 272-304, zu finden.

### Beispiele

### I. Herstellung von erfindungsgemäßen Copolymeren

### Copolymer 1

In einem 21-Polymerisationsgefäß mit Rührer, Rückflußkühler, Innenthermometer und 3 Tropftrichtern wurde eine Mischung von 610 g Wasser und 23,7 g N-Vinylimidazol vorgelegt und nach Spülen mit Stickstoff auf 80°C erhitzt. Dann wurden 176,3 g Methylpolyethylenglykolmethacrylat (Mₙ 350) (Zulauf 1), 100 g einer 4 gew.-%igen wäßrigen Natriumdisulfitlösung (Zulauf 2) und eine Initiatormischung aus 4,0 g 2,2'-Azobis-(2-amidinopropan)dihydrochlorid und 80 g Wasser (Zulauf 3) kontinuierlich zugetropft (Zulauf 1 und 2 in 3 h, Zulauf 3 in 4 h). Nach beendeter Initiatorzugabe wurde das Reaktionsgemisch noch 1 h bei 80°C gerührt, dann wurde bei dieser Temperatur nochmals eine Initiatormischung aus 1 g 2,2'-Azobis-(2-amidinopropan)dihydrochlorid und 20 g Wasser in einer Portion zugegeben. Nach weiterem zweistündigen Rühren bei 80°C wurde das Reaktionsgemisch auf Raumtemperatur abgekühlt.

Es wurde eine 20,3 gew.-%ige Polymerlösung mit einem K-Wert von 25,5 erhalten.

### Copolymer 2

In einem 21-Polymerisationsgefäß mit Rührer, Rückflußkühler, Innenthermometer und 4 Tropftrichtern wurde eine Mischung von 426,7 g Wasser und 16,3 g N-Vinylimidazol vorgelegt und nach Spülen mit Stickstoff auf 80°C erhitzt. Dann wurden 346,5 g einer 50 gew.-%igen wäßrigen Lösung von Methylpolyethylenglykolmethacrylat (Mₙ 1000) (Zulauf 1), eine Mischung von 10,5 g N-Vinylpyrrolidon und 100 g Wasser (Zulauf 2), 100 g einer 4 gew.-%igen wäßrigen Natriumdisulfitlösung (Zulauf 3) und eine Initiatormischung aus 4,0 g 2,2'-Azobis-(2-amidinopropan)dihydrochlorid und 80 g Wasser (Zulauf 4) kontinuierlich zugetropft (Zulauf 1, 2 und 3 in 3 h, Zulauf 4 in 4 h). Nach beendeter Initiatorzugabe wurde das Reaktionsgemisch noch 1 h bei 80°C gerührt, dann wurde bei dieser Temperatur nochmals eine Initiatormischung aus 1 g 2,2'-Azobis-(2-amidinopropan)dihydrochlorid und 20 g Wasser in einer Portion zugegeben. Nach weiterem zweistündigen Rühren bei 80°C wurde das Reaktionsgemisch auf Raumtemperatur abgekühlt.

Es wurde eine 20,3 gew.-%ige Polymerlösung mit einem K-Wert von 30,3 erhalten.

### Copolymer 3

In einem 21-Polymerisationsgefäß mit Rührer, Rückflußkühler, Innenthermometer und 3 Tropftrichtern wurden 230 g handelsüblicher pH7-Phosphatpuffer vorgelegt und nach Spülen mit Stickstoff auf 80°C erhitzt. Dann wurden 540,0 g einer 50 gew.%igen wäßrigen Lösung von Methylpolyethylenglykolmethacrylat (Mₙ 1000) (Zulauf 1), eine Mischung von 30,0 g N-Vinylpyrrolidon und 100 g Wasser (Zulauf 2) und eine Initiatormischung aus 6,0 g 2,2'-Azobis-(2-amidinopropan)dihydrochlorid und 80 g Wasser (Zulauf 3) kontinuierlich zugetropft (Zulauf 1 und 2 in 3 h, Zulauf 3 in 4 h). Nach beendeter Initiatorzugabe wurde das Reaktionsgemisch noch 1 h bei 80°C gerührt, dann wurde bei dieser Temperatur nochmals eine Initiatormischung aus 1,5 g 2,2'-Azobis-(2-amidinopropan)dihydrochlorid und 20 g Wasser in einer Portion zugegeben. Nach weiterem zweistündigen Rühren bei 80°C wurde das Reaktionsgemisch auf Raumtemperatur abgekühlt.

Es wurde eine 31,4 gew.-%ige Polymerlösung mit einem K-Wert von 25,5 erhalten.

### II. Anwendung von erfindungsgemäßen Copolymeren

Die schmutzdispergierende Wirkung der erhaltenen Copolymere wurde anhand der Entfernung von Tee- und Grasflecken von Baumwollgeweben getestet. Dazu wurden die handelsüblichen standardisierten Baumwoll-Prüfgewebe EMPA 164 (Gras auf Baumwolle) und EMPA 167 (Tee auf Baumwolle) eingesetzt.

Alle Waschversuche wurden bei 40°C und einer Wasserhärte von 3 mmol Ca²⁺/I, Ca:Mg-Verhältnis 3:1 durchgeführt. Alle Waschcyclen dauerten 30 min.

### Beispiel 1

Eine Lösung von jeweils 1,25 g der Copolymere 1 bis 3 in 100 ml deionisiertem Wasser wurde mit 0,05 N Natronlauge auf den pH-Wert 7 eingestellt.

Nach Messung der Remission bei 440 nm (EMPA 164) bzw. 480 (EMPA 167) mit einem Photometer Elrepho^{®} 2000 (Datacolor) wurde jeweils ein Stück Prüfgewebe (Gewicht 1,25 g) in eine Petrischale gelegt und mit Hilfe einer Pipette mit jeweils 15 g der erhaltenen Polymerlösungen getränkt. Die Petrischale wurde dann verschlossen und 24 h im Dunkeln bei Raumtemperatur stehen gelassen.

Danach wurden die behandelten Prüfgewebe in einem Launder-O-meter mit 250 ml einer Waschflotte, die 3,5 g/l eines handelsüblichen Flüssigwaschmittels (Ariel Flüssig) enthielt, gewaschen. Nach Spülen und Trocknen wurde die Remission der Prüfgewebe erneut gemessen.

Zum Vergleich wurde die Remission von Prüfgewebe gemessen, bei dem alle Verfahrensschritte, jedoch ohne Zugabe der Copolymere 1 bis 3 vorgenommen wurden.

Die jeweils erhaltenen ΔR-Werte (Differenz zwischen Remission vor der Wäsche und Remission nach der Wäsche) sind in der unten folgenden Tabelle zusammengestellt.

### Beispiel 2

Es wurde analog Beispiel 1 vorgegangen, jedoch wurden der Copolymerlösung jeweils 50 mg Trilon^{®} A (Nitrilotriessigsäure-Natriumsalz) zugesetzt.

Die jeweils erhaltenen ΔR-Werte sind in der unten folgenden Tabelle zusammengestellt.

### Beispiel 3

Es wurde analog Beispiel 1 vorgegangen, jedoch wurden der Copolymerlösung jeweils 50 mg Protease (Savinase^{®}, Hersteller Novo Nordisk) zugesetzt.

Die jeweils erhaltenen ΔR-Werte sind in der unten folgenden Tabelle zusammengestellt.

### Beispiel 4

Die Copolymere 1 bis 3 enthaltende Flüssigwaschmittel wurden hergestellt, indem 95 ml handelsübliches Flüssigwaschmittel (Ariel Flüssig) mit jeweils 5 ml einer 25 gew.-%igen Lösung des Copolymers 1, 2 oder 3 in deionisiertem Wasser gemischt wurden.

Die Prüfgewebe wurden dann analog Beispiel 1 unter Verwendung von jeweils 0,8 g der erhaltenen Flüssigwaschmittel vorbehandelt und unter Verwendung von 250 ml einer Waschflotte, die 3,5 g/l Ariel Flüssig enthielt, gewaschen.

Die analog Beispiel 1 erhaltenen ΔR-Werte sind in der folgenden Tabelle zusammengestellt.

**Tabelle**

| | | ΔR (EMPA 164) | ΔR (EMPA 167) |
|---|---|---|---|
| | | | |
| Beispiel 1 | Copolymer 1 | 18,4 | 3,5 |
| Beispiel 1 | Copolymer 2 | 18,6 | 4,3 |
| Beispiel 1 | Copolymer 3 | 16,7 | 4,9 |
| Beispiel 1 | ohne Polymer | 15,2 | 3,0 |
| | | | |
| Beispiel 2 | Copolymer 1 | | 8,6 |
| Beispiel 2 | Copolymer 2 | | 9,8 |
| Beispiel 2 | Copolymer 3 | | 11,3 |
| Beispiel 2 | ohne Polymer | | 7,6 |
| | | | |
| Beispiel 3 | Copolymer 1 | 23,4 | |
| Beispiel 3 | Copolymer 2 | 25,1 | |
| Beispiel 3 | Copolymer 3 | 22,1 | |
| Beispiel 3 | ohne Polymer | 21,7 | |
| | | | |
| Beispiel 4 | Copolymer 1 | 8,8 | 11,5 |
| Beispiel 4 | Copolymer 2 | 10,2 | 12,2 |
| Beispiel 4 | Copolymer 3 | 9,8 | 11,9 |
| Beispiel 4 | ohne Polymer | 8,3 | 10,7 |

## Patentansprüche

1. Wasserlösliche Copolymere, die
(a) 60 bis 99 Gew.-% mindestens eines monoethylenisch ungesättigten Polyalkylenoxidmonomers der allgemeinen Formel I 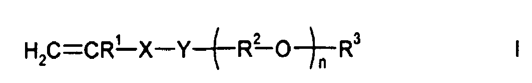 in der die Variablen folgende Bedeutung haben:
X -CH₂- oder -C(O)-, wenn Y für -O- steht; -C(O)-, wenn Y für -NH- steht; -O- oder -O-(CH₂)₄-, wenn Y für eine chemische Bindung steht;
Y -O-, -NH- oder eine chemische Bindung;
R¹ Wasserstoff oder Methyl;
R² C₂-C₄-Alkylenreste, die gleich oder verschieden sowie linear oder ver- zweigt sein können, wobei jedoch mindestens 50% der Reste R² für Ethylen stehen;
R³ C₁-C₂₂-Alkyl, Phenyl, p-(C₁-C₁₂-alkyl)phenyl oder Wasserstoff;
n eine ganze Zahl von 6 bis 50,
(b) 1 bis 40 Gew.% mindestens eines nichtquatemisierten, mindestens ein Stickstoffatom enthaltenden, dipolaren Monomers, ausgewählt aus der Gruppe der N-Vinylpyrrolidone, N-Vinylimidazole, N-Vinylcaprolactame, Vinylpyridine, N-Vinylformamide, N-Vinylacetamide, basische Ester der Acrylsäure mit Aminoalkoholen, basische Ester der Methacrylsäure mit Aminoalkoholen, N,N-Di(C₁-C₄-alkyl)amino(C₂-C₆-alkyl)amide der Acrylsäure und N,N-Di(C₁-C₄-alkyl)amino(C₂-C₆-alkyl)amide der Methacrylsäure,
(c) 0 bis 39 Gew.% anderer nichtionischer monoethylenisch ungesättigter Monomere und
(d) 0 bis 10 Gew.-% anderer anionischer monoethylenisch ungesättigter Monomere
einpolymerisiert enthalten und ein mittleres Molekulargewicht M_{w} von 2 000 bis 500 000 D aufweisen.

2. Copolymere nach Anspruch 1, die als Monomer (a) mindestens ein Monomer der Formel I einpolymerisiert enthalten, in der die Variablen folgende Bedeutung haben:
X -C(O)-;
Y -O- oder -NH-;
R¹ Wasserstoff oder Methyl;
R² Ethylen;
R³ Methyl oder Wasserstoff;
n eine ganze Zahl von 15 bis 25.

3. Copolymere nach den Ansprüchen 1 oder 2, die als Monomer (b) mindestens ein Monomer, ausgewählt aus der Gruppe der N-Vinylpyrrolidone und N-Vinylimidazole, einpolymerisiert enthalten.

4. Copolymere nach den Ansprüchen 1 bis 3, die 90 bis 95 Gew.-% Monomer (a), 5 bis 15 Gew.-% Monomer (b), 0 bis 15 Gew.-% Monomer (c) und 0 bis 2,5 Gew.-% Monomer (d) einpolymerisiert enthalten.

5. Copolymere nach den Ansprüchen 1 bis 4, die ein mittleres Molekulargewicht M_{w} von 4000 bis 60 000 D aufweisen.

6. Verwendung von Copolymeren gemäß den Ansprüchen 1 bis 5 als Dispergiermittel und Sequestriermittel für pigmentierte Materialien.

7. Verwendung nach Anspruch 6, **dadurch gekennzeichnet, daß** es sich bei den pigmentierten Materialien um pigmenthaltigen Schmutz handelt.

8. Verwendung von Copolymeren gemäß den Ansprüchen 1 bis 5 als Zusatz zu Waschmitteln, Wäschevorbehandlungsmitteln, Reinigungsmitteln für harte Oberflächen, Zahnreinigungsmitteln und Körperpflegemitteln.

9. Verwendung von Copolymeren gemäß den Ansprüchen 1 bis 5 als Hilfsstoffe für die Textilverarbeitung, Papierherstellung und -verarbeitung und Deinkingprozesse.

10. Waschmittelformulierungen, die Copoylmere gemäß den Ansprüchen 1 bis 5 als Zusatz enthalten.

11. Flüssige Waschmittelformulierungen, enthaltend
(A) 0,05 bis 20 Gew.-% mindestens eines Copolymers gemäß den Ansprüchen 1 bis 5,
(B) 0,5 bis 40 Gew.-% mindestens eines nichtionischen, anionischen und/oder kationischen Tensids,
(C) 0 bis 20 Gew.-% eines anorganischen Builders,
(D) 0 bis 10 Gew.-% eines organischen Cobuilders,
(E) 0 bis 60 Gew.-% anderer üblicher Inhaltsstoffe, wie Soda, Enzyme, Parfum, Komplexbildner, Korrosionsinhibitoren, Bleichmittel, Bleichaktivatoren, Bleichkatalysatoren, Farbübertragungsinhibitoren, Vergrauungsinhibitoren, Soil-Release-Polyester, Faser- und Farbschutzadditve, Silicone, Farbstoffe, Bakterizide, organische Lösungsmittel, Löslichkeitsvermittler, Hydrotrope, Verdicker und/oder Alkanolamine und
(F) 0 bis 99,45 Gew.-% Wasser.

12. Feste Waschmittelformulierungen, enthaltend
(A) 0,05 bis 10 Gew.-% mindestens eines Copolymers gemäß den Ansprüchen 1 bis 5,
(B) 0,5 bis 40 Gew.-% mindestens eines nichtionischen, anionischen und/oder kationischen Tensids,
(C) 0,5 bis 50 Gew.-% eines anorganischen Builders,
(D) 0 bis 10 Gew.-% eines organischen Cobuilders und
(E) 0 bis 60 Gew.-% anderer üblicher Inhaltsstoffe, wie Stellmittel, Enzyme, Parfum, Komplexbildner, Korrosionsinhibitoren, Bleichmittel, Bleichaktivatoren, Bleichkatalysatoren, Farbübertragungsinhibitoren, Vergrauungsinhibitoren, Soil-Release-Polyester, Faser- und Farbschutzadditve, Silicone, Farbstoffe, Bakterizide, Auflösungsverbesserer und/oder Sprengmittel, wobei die Summe der Komponenten (A) bis (E) 100 Gew.-% ergibt.

## Claims

1. A water-soluble copolymer which comprises, in copolymerized form,
(a) 60 to 99% by weight of at least one monoethylenically unsaturated polyalkylene oxide monomer of the formula I 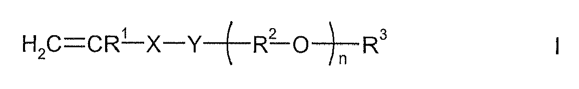 in which the variables have the following meanings:
X is -CH₂- or -C(O)-, if Y is -O-; is -C(O)-, if Y is -NH-; is -O- or -O-(-CH₂)₄-, if Y is a chemical bond;
Y is -O-, -NH- or a chemical bond;
R¹ is hydrogen or methyl;
R² is C₂-C₄-alkylene radicals, which may be identical or different and also linear or branched, but where at least 50% of the radicals R² are ethylene;
R³ is C₁-C₂₂-alkyl, phenyl, p-(C₁-C₁₂-alkyl)phenyl or hydrogen;
n is an integer from 6 to 50,
(b) 1 to 40% by weight of at least one nonquaternized dipolar monomer comprising at least one nitrogen atom and chosen from the group of N-vinylpyrrolidones, N-vinylimidazoles, N-vinylcaprolactams, vinylpyridines, N-vinylformamides, N-vinylacetamides, basic esters of acrylic acid with amino alcohols, basic esters of methacrylic acid with amino alcohols, N,N-di(C₁-C₄-alkyl)amino(C₂-C₆-alkyl)amides of acrylic acid and N,N-di(C₁-C₄-alkyl)amino(C₂-C₆-alkyl)amides of methacrylic acid,
(c) 0 to 39% by weight of other nonionic monoethylenically unsaturated monomers and
(d) 0 to 10% by weight of other anionic monoethylenically unsaturated monomers
and has an average molecular weight M_{w} of from 2000 to 500 000 D.

2. The copolymer according to claim 1, which comprises, in copolymerized form, as monomer (a), at least one monomer of the formula I in which the variables have the following meanings:
X is -C(O)-;
Y is -O- or -N H-;
R¹ is hydrogen or methyl;
R² is ethylene;
R³ is methyl or hydrogen;
n is an integer from 15 to 25.

3. The copolymer according to claim 1 or 2, which comprises, in copolymerized form, as monomer (b), at least one monomer chosen from the group of N-vinylpyrrolidones and N-vinylimidazoles.

4. The copolymer according to any of claims 1 to 3, which comprises, in copolymerized form, 90 to 95% by weight of monomer (a), 5 to 15% by weight of monomer (b), 0 to 15% by weight of monomer (c) and 0 to 2.5% by weight of monomer (d).

5. The copolymer according to any of claims 1 to 4, which has an average molecular weight M_{w} of from 4000 to 60 000 D.

6. The use of copolymers according to any of claims 1 to 5 as dispersants and sequestrants for pigmented materials.

7. The use according to claim 6, wherein the pigmented materials are pigment-containing soiling.

8. The use of copolymers according to any of claims 1 to 5 as additive for detergents, laundry pretreatment agents, cleaning compositions for hard surfaces, dentifrices and bodycare compositions.

9. The use of copolymers according to any of claims 1 to 5 as auxiliaries for textile processing, paper making and paper processing and deinking processes.

10. A detergent formulation which comprises copolymers according to any of claims 1 to 5 as additive.

11. A liquid detergent formulation comprising
(A) 0.05 to 20% by weight of at least one copolymer according to any of claims 1 to 5,
(B) 0.5 to 40% by weight of at least one nonionic, anionic and/or cationic surfactant,
(C) 0 to 20% by weight of an inorganic builder,
(D) 0 to 10% by weight of an organic cobuilder,
(E) 0 to 60% by weight of other customary ingredients, such as sodium carbonate, enzymes, perfumes, complexing agents, corrosion inhibitors, bleaches, bleach activators, bleach catalysts, color transfer inhibitors, graying inhibitors, soil release polyesters, fiber and color protection additives, silicones, dyes, bactericides, organic solvents, solubility promoters, hydrotropes, thickeners and/or alkanolamines and
(F) 0 to 99.45% by weight of water.

12. A solid detergent formulation comprising
(A) 0.05 to 10% by weight of at least copolymer according to any of claims 1 to 5,
(B) 0.5 to 40% by weight of at least one nonionic, anionic and/or cationic surfactant,
(C) 0.5 to 50% by weight of an inorganic builder,
(D) 0 to 10% by weight of an organic cobuilder and
(E) 0 to 60% by weight of other customary ingredients, such as extenders, enzymes, perfume, complexing agents, corrosion inhibitors, bleaches, bleach activators, bleach catalysts, color transfer inhibitors, graying inhibitors, soil release polyesters, fiber and color protection additives, silicones, dyes, bactericides, dissolution improvers and/or disintegrants,
where the sum of components (A) to (E) is 100% by weight.

## Revendications

1. Copolymères hydrosolubles, qui contiennent intégrés par polymérisation
(a) 60 à 99 % en poids d'au moins un monomère polyoxy-alkylène à insaturation monoéthylénique, de formule générale I 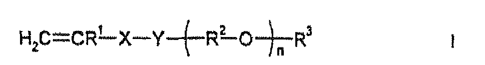 dans laquelle les variables ont les significations suivantes :
X représente -CH₂- ou -C(O)-, lorsque Y représente -O- ; représente -C(O)-, lorsque Y représente -NH- ; représente -O- ou -O-(CH₂)₄-, lorsque Y représente une liaison chimique ;
Y représente -O-, -NH- ou une liaison chimique ;
R¹ représente un atome d'hydrogène ou le groupe méthyle ;
R² représente des radicaux alkylène en C₂-C₄, qui peuvent être identiques ou différents ainsi que linéaires ou ramifiés, mais au moins 50 % des radicaux R² représentant le groupe éthylène ;
R³ représente un radical alkyle en C₁-C₂₂, phényle, p-[alkyl(C₁-C₁₂)]phényle ou un atome d'hydrogène ;
n représente un nombre entier valant de 6 à 50,
(b) 1 à 40 % en poids d'au moins un monomère dipolaire non rendu quaternaire, contenant au moins un atome d'azote, choisi dans le groupe des N-vinylpyrrolidones, N-vinylimidazoles, N-vinylcaprolactames, vinylpyridines, N-vinylformamides, N-vinylacétamides, esters basiques de l'acide acrylique avec des aminoalcools, esters basiques de l'acide méthacrylique avec des aminoalcools, N,N-di[alkyl(C₁-C₄)]amino[alkyl(C₂-C₆)]amides de l'acide acrylique et N,N-di[alkyl(C₁-C₄)]amino-[alkyl(C₂-C₆)]amides de l'acide méthacrylique,
(c) 0 à 39 % en poids d'autres monomères non ioniques à insaturation monoéthylénique et
(d) 0 à 10 % en poids d'autres monomères anioniques à insaturation monoéthylénique
et présentent une masse moléculaire moyenne M_{w} de 2 000 à 500 000 Da.

2. Copolymères selon la revendication 1, qui contiennent en tant que monomère (a) intégré par polymérisation au moins un monomère de formule I, dans laquelle les variables ont les significations suivantes :
X -C (O)- ;
Y -O- ou -NH- ;
R¹ hydrogène ou méthyle ;
R² éthylène ;
R³ méthyle ou hydrogène ;
n un nombre entier valant de 15 à 25.

3. Copolymères selon la revendication 1 ou 2, qui contiennent en tant que monomère (b) intégré par polymérisation au moins un monomère, choisi dans le groupe des N-vinylpyrrolidones et N-vinylimidazoles.

4. Copolymères selon les revendications 1 à 3, qui contiennent de 90 à 95 % en poids de monomère (a), de 5 à 15 % en poids de monomère (b), de 0 à 15 % en poids de monomère (c) et de 0 à 2,5 % en poids de monomère (d), intégrés par polymérisation.

5. Copolymères selon les revendications 1 à 4, qui présentent une masse moléculaire moyenne M_{w} de 4 000 à 60 000 Da.

6. Utilisation de copolymères selon les revendications 1 à 5, en tant que dispersants et séquestrants pour des matières pigmentées.

7. Utilisation selon la revendication 6, **caractérisée en ce que** les matières pigmentées consistent en de la salissure contenant des pigments.

8. Utilisation de copolymères selon les revendications 1 à 5, en tant qu'additif à des produits de lavage, des produits de prétraitement du linge, des produits de nettoyage pour surfaces dures, des produits de nettoyage dentaire et des produits pour le soin du corps.

9. Utilisation de copolymères selon les revendications 1 à 5, en tant qu'adjuvants pour le traitement de textiles, la fabrication et le traitement du papier et des processus de désencrage.

10. Compositions de produits de lavage, qui contiennent comme additif des copolymères selon les revendications 1 à 5.

11. Compositions de produits de lavage liquides, contenant
(A) 0,05 à 20 % en poids d'au moins un copolymère selon les revendications 1 à 5,
(B) 0,5 à 40 % en poids d'au moins un tensioactif non ionique, anionique et/ou cationique,
(C) 0 à 20 % en poids d'un adjuvant actif de détergence inorganique,
(D) 0 à 10 % en poids d'un adjuvant actif de détergence organique,
(E) 0 à 60 % en poids d'autres composants usuels, tels que du carbonate de sodium, des enzymes, un parfum, des complexants, des agents anticorrosion, des agents de blanchiment, des activateurs de blanchiment, des catalyseurs de blanchiment, des inhibiteurs de transfert de couleurs, des agents antiredéposition, des polyesters antisalissure, des additifs protecteurs des fibres et des couleurs, des silicones, des colorants, des bactéricides, des solvants organiques, des agents améliorant la dissolution, des agents hydrotropes, des épaississants et/ou des alcanolamines et
(F) 0 à 99,45 % d'eau.

12. Compositions de produits de lavage solides, contenant
(A) 0,05 à 20 % en poids d'au moins un copolymère selon les revendications 1 à 5,
(B) 0,5 à 40 % en poids d'au moins un tensioactif non ionique, anionique et/ou cationique,
(C) 0,5 à 50 % en poids d'un adjuvant actif de détergence inorganique,
(D) 0 à 10 % en poids d'un adjuvant actif de détergence organique et
(E) 0 à 60 % en poids d'autres composants usuels, tels que des fixateurs, des enzymes, un parfum, des complexants, des agents anticorrosion, des agents de blanchiment, des activateurs de blanchiment, des catalyseurs de blanchiment, des inhibiteurs de transfert de couleurs, des agents antiredéposition, des polyesters antisalissure, des additifs protecteurs des fibres et des couleurs, des silicones, des colorants, des bactéricides, des agents améliorant la dissolution et/ou des désintégrants,
la somme des composants (A) à (E) étant égale à 100 % en poids.
